# EUROPEAN PATENT APPLICATION

(11) **EP 3 392 850 A1**
(43) Date of publication of application: **24.10.2018**
(21) Application number: 18168411.9
(22) Date of filing: 20.04.2018
(51) Int. Cl.: G07G 1/00, G06K 7/10

(54) **READING DEVICE AND METHOD FOR CONTROLLING LIGHT EMISSION OF THE SAME**

(30) Priority: 21.04.2017 JP 2017084494
(71) Applicant: Toshiba TEC Kabushiki Kaisha, Tokyo 141-8562 (JP)
(72) Inventor: NAITO, Hidehiro, Shinagawa-ku,, Tokyo 141-8562 (JP)
(74) Representative: Takeuchi, Maya

(57) **Abstract**

A reading device includes an image capturing device, a light emitting device, and a processor. The processor controls the image capturing device to capture an image of an image capturing area. When the reading device is in a standby mode, the processor determines, based on the captured image, whether an object is in the image capturing area. If the object is determined to be in the image capturing area, the processor switches an operation mode of the reading device from the standby mode to a reading mode in which a commodity in the image capturing area is identified based on the captured image. The processor controls an amount of light emitted by the light emitting device based on whether the reading device is in the standby mode or in the reading mode, such that it is less in the standby mode than in the reading mode.

## Description

### FIELD

The present invention relates to the field of a sales system in general, and embodiments described herein relate in particular to a reading device and a method for controlling light emission of the reading device.

### BACKGROUND

Conventionally, a reading device for reading a two-dimensional code or a barcode of a commodity code or the like is used in a commodity registration processing. The reading device is equipped with an image-capturing element such as a CCD (Charge Coupled Device) or a CMOS (Complementary Metal-Oxide Semiconductor). A laser optical type scanner is also used as a reading device. The reading device provided with the image-capturing element detects a code symbol included in a captured image and performs reading or decoding of the commodity code from the code symbol. An object recognition technology is applied to the captured image to identify the commodity included in the captured image and the identified commodity is used in a commodity registration processing.

Generally, such reading device is activated by a human sensor or an infrared camera. That is, when a person is sensed or an object is detected, the reading device switches from a standby mode to a reading mode. If a person or an object is no longer detected for a predetermined period, the reading device switches to the standby mode and a photography light is turned off. The photography light has a large amount of light output (light intensity) and also a large power consumption. Accordingly, such mode switching is performed to achieve reduction in glare and power saving.

In the meantime, there is a demand for achieving a cost-saving in manufacturing of the reading device by reducing the number of components thereof.

To meet such demand, there is provided a reading device comprising:
an image capturing device;
a light emitting device; and
a processor configured to:
   control the image capturing device to capture an image of an image capturing area,
   when the reading device is in a standby mode:
      determine, based on the captured image, whether an object is in the image capturing area, and
      if the object is determined to be in the image capturing area, switch an operation mode of the reading device from the standby mode to a reading mode in which a commodity in the image capturing area is identified based on the captured image, and
   control an amount of light emitted by the light emitting device based on whether the reading device is in the standby mode or in the reading mode, wherein the amount of light emitted by the light emitting device in the standby mode is less than the amount of light emitted by the light emitting device in the reading mode.

Preferably, the processor controls a duty ratio of pulse emission of the light emitting element to reduce the amount of light emitted by the light emitting element in the standby mode compared with that in the reading mode.

Preferably still, the processor reduces a current of a driving signal provided to the light emitting element in the standby mode compared with that in the reading mode so that the amount of light emitted by the light emitting element in the standby mode is reduced compared with that in the reading mode.

Preferably yet, the light emitting element includes a plurality of light emitting elements, and the processor decreases the number of the light emitting elements which emit light in the standby mode compared with that in the reading mode so that the light by the light emitting element by the light emitting element in the standby mode is reduced compared with that in the reading mode.

Suitably, the device further comprises:
a second light emitting element controlled to emit light in the standby mode to notify a user of the standby mode, wherein the processor controls the second light emitting element to emit a reduced light amount compared with that in the reading mode.

Suitably still, the processor is further configured to:
in the reading mode, determine whether no object is in the image capturing area for longer than a predetermined time, and
if no object is determined to be in the image capturing area for longer than the predetermined time, switch the operation mode of the reading device from the reading mode to the standby mode.

Suitably yet, the light emitting element is an infrared light emitting element.

Typically, in the reading mode, the processor identifies the commodity by extracting feature values of the object from the captured image and comparing the extracted feature values to reference feature values.

Typically still, the processor is further configured to control the image capturing device to capture the image in the standby mode using a longer exposure time compared with that in the reading mode.

Typically yet, the processor is further configured to control the image capturing device to capture the image in the standby mode using a higher gain compared with that in the reading mode.

The invention also relates to a point of sales system comprising:
a point of sales terminal; and
the device described above.

The invention further relates to a method for controlling a light emission of a reading device which includes an image capturing device and a light emitting device, the method comprising:
controlling the image capturing device to capture an image of an image capturing area;
when the reading device is in a standby mode:
   determining, based on the captured image, whether an object is in the image capturing area, and
   if the object is determined to be in the image capturing area, switching an operation mode of the reading device from the standby mode to a reading mode in which a commodity in the image capturing area is identified based on the captured image; and
controlling an amount of light emitted by the light emitting device based on whether the reading device is in the standby mode or in the reading mode, wherein the amount of light emitted by the light emitting device in the standby mode is less than the amount of light emitted by the light emitting device in the reading mode.

Preferably, in the method, controlling the amount of light emitted by the light emitting device includes controlling a duty ratio of pulse emission of the light emitting element to reduce the amount of light emitted by the light emitting element in the standby mode compared with that in the reading mode.

Preferably still, in the method, controlling the amount of light emitted by the light emitting device includes reducing a current of a driving signal provided to the light emitting element in the standby mode compared with that in the reading mode so that the amount of light emitted by the light emitting element in the standby mode is reduced compared with that in the reading mode.

Preferably yet, in the method, the light emitting element includes a plurality of light emitting elements, and controlling the amount of light emitted by the light emitting device includes decreasing the number of the light emitting elements which emit light in the standby mode compared with that in the reading mode so that the light by the light emitting element by the light emitting element in the standby mode is reduced compared with that in the reading mode.

Suitably, in the method, the reading device further includes a second light emitting element controlled to emit light in the standby mode to notify a user of the standby mode, wherein controlling the amount of light emitted by the light emitting device includes controlling the second light emitting element to emit a reduced light amount compared with that in the reading mode.

Suitably still, the method further comprises:
in the reading mode, determining whether no object is in the image capturing area for longer than a predetermined time; and
if no object is determined to be in the image capturing area for longer than the predetermined time, switching the operation mode of the reading device from the reading mode to the standby mode.

Suitably still, in the method, the light emitting element is an infrared light emitting element.

Suitably yet, the method further comprises:
in the reading mode, identifying the commodity by extracting feature values of the object from the captured image and comparing the extracted feature values to reference feature values.

Typically, in the method, the image capturing device captures the image in the standby mode using a longer exposure time compared with that in the reading mode.

Typically still, in the method, the image capturing device captures the image in the standby mode using a higher gain compared with that in the reading mode.

The invention also concerns a non-transitory computer readable medium storing a program causing a computer to execute the method describe above.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a perspective view illustrating a POS system according to an embodiment;
FIG. 2 is a top view illustrating an example configuration of a reading unit included in a reading device;
FIG. 3 is a front view illustrating the reading device;
FIG. 4 is a block diagram illustrating an example configuration of a POS terminal and the reading device;
FIG. 5 is a functional block diagram illustrating a functional configuration of the reading device;
FIG. 6 is a flowchart illustrating an example sequence of operations of the reading device; and
FIG. 7 is a perspective view illustrating an example of a self-service POS terminal.

### DETAILED DESCRIPTION

A reading device according to an embodiment includes an image capturing device and a light emitting device. A processor controls the image capturing device to capture an image of an image capturing area. When the reading device is in a standby mode, the processor determines, based on the captured image, whether an object is in the image capturing area. If the object is determined to be in the image capturing area, the processor switches an operation mode of the reading device from the standby mode to a reading mode in which a commodity in the image capturing area is identified based on the captured image. The processor controls an amount of light emitted by the light emitting device based on whether the reading device is in the standby mode or in the reading mode, wherein the amount of light emitted by the light emitting device in the standby mode is less than the amount of light emitted by the light emitting device in the reading mode.

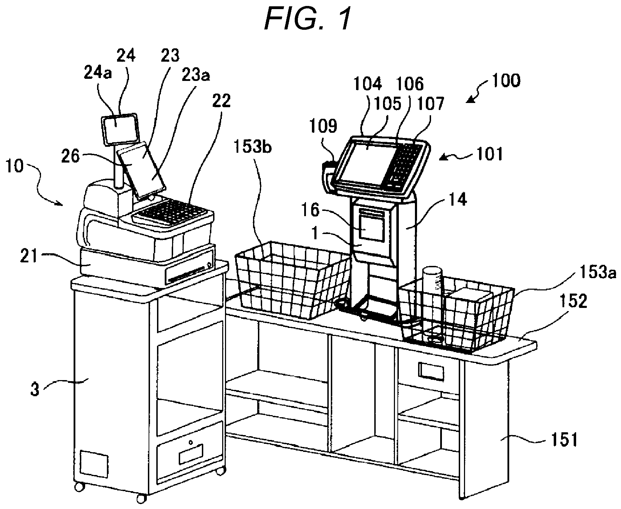

FIG. 1 is a perspective view illustrating a POS (Point Of Sales) system 100 according to a present embodiment. The POS system 100 includes a POS terminal 10 and a reading device 101 as main components.

The POS terminal 10 performs registration of a commodity and settlement of a corresponding transaction. The POS terminal 10 is positioned on the upper surface of a drawer 21 on a register table 3. The POS terminal 10 controls opening of the drawer 21. A keyboard 22 is arranged on the upper surface of the POS terminal 10. A display device 23 for displaying information is provided at a back side of the keyboard 22 facing towards an operator who operates the keyboard 22. The display device 23 displays information on a display surface 23a. A touch panel 26 is arranged on the display surface 23a. A customer display device 24 is rotatably arranged at a back side of the display device 23. The customer display device 24 displays information on a display surface 24a thereof. In the customer display device 24 illustrated in FIG. 1, although the display surface 24a is shown directed toward the front side in FIG. 1, the customer display device 24 is rotated so that the display surface 24a faces toward the back side in FIG. 1 to display information to the customer.

A reading device 101 connected with the POS terminal 10 is installed on a receiving surface 152 of a counter table 151. The reading device 101 includes a rectangular casing 14. A reading window 16 is arranged on the front surface of the casing 14. A display and operation unit 104 is attached to the upper part of the casing 14. A display device 106, which includes a touch panel 105 on the surface thereof, is provided in the display and operation unit 104. A keyboard 107 is provided at a position adjacent to the right side of the display device 106. A customer display device 109 for providing information to a customer is arranged at the left back side of the display and operation unit 104.

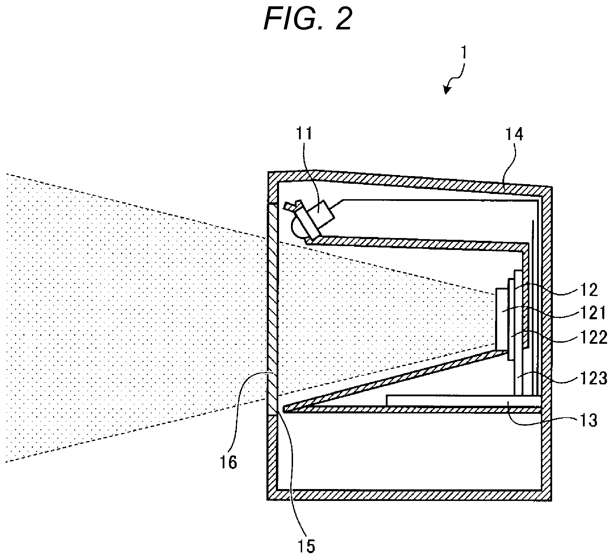

The reading device 101 includes a reading unit 1. The reading unit 1 includes an image-capturing unit 12 (see FIG. 2) at the back side of the reading window 16.

A store clerk (operator) takes a commodity from a first shopping basket 153a and holds the commodity over the reading window 16 of the reading device 101 to capture an image of the commodity with the image-capturing unit 12. The reading device 101 outputs the image captured by the image-capturing unit 12 to the POS terminal 10.

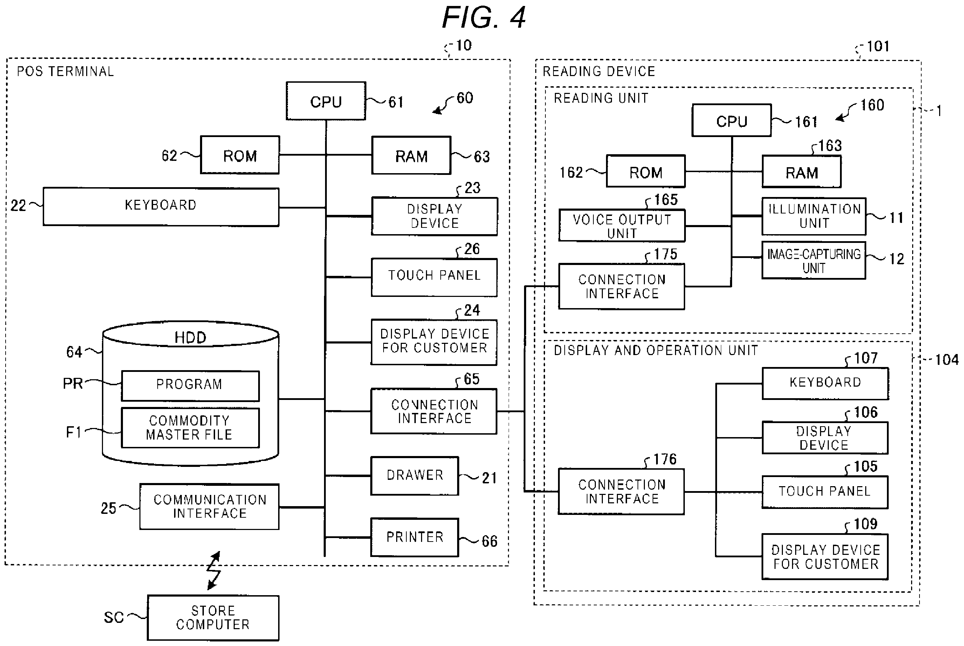

The POS terminal 10 receives the captured image and performs an object recognition (generic object recognition) on the captured image to identify the commodity and reads commodity information corresponding to the identified commodity from a commodity master file F1 (see FIG. 4) to register the commodity information. Alternatively, in a case in which a code symbol is included in the captured image, the POS terminal 10 decodes the code symbol to read information and performs sales registration of the commodity, using the information. The store clerk puts the commodity in a second shopping basket 153b after the sales registration of the commodity is carried out and performs a reading for a next commodity.

The generic object recognition is a technology for recognizing an article from image data that includes an image of an article to be identified. A computer provided in a commodity sales data processing apparatus extracts from the image data a feature value of the article included in the image. The computer of the commodity sales data processing apparatus compares the feature value with a feature value data of a reference image registered in advance in a dictionary file to calculate a similarity degree, and recognizes the article based on the similarity degree.

FIG. 2 is a top view illustrating an example configuration of the reading unit 1 of the reading device 101. FIG. 2 is a top view of the reading unit 1 illustrated by removing a ceiling plate and a portion of the casing to make it easy to understand the internal structure. As illustrated in FIG. 2, the reading device 101 includes the illumination unit 11, the image-capturing unit 12, and a control board 13 in the casing 14. An opening 15 is provided on the side surface of the casing 14 perpendicular to the image-capturing direction of the image-capturing unit 12. The reading window 16 is provided in the opening 15. The reading window 16 includes a transparent glass plate having low reflectance.

The image-capturing unit 12 includes a condensing lens 121, an image-capturing element 122, and an image control board 123. The condensing lens 121 is a convex lens and forms an image of the commodity held over the reading window 16 on the image-capturing element 122. The image-capturing element 122 is an image sensor such as a CCD (Charge Coupled Device) image sensor or a CMOS (Complementary Metal-Oxide Semiconductor) image sensor and performs photoelectric conversion on a light image with photoelectric elements arranged in a matrix to output electrons stored in a capacitor by the exposure to generate an electric signal.

An image control board 123 starts or stops an image-capturing operation of the image-capturing element 122 with a control signal. In the image capturing operation, the image control board 123 amplifies the electric signal of the image output from the image-capturing element 122, performs a signal processing such as an A/D conversion, generates image data corresponding to the light image, and stores the image data in a buffer for each frame.

The control board 13 is a substrate including a CPU 161 for controlling the reading unit 1, a ROM 162, a RAM 163 (see also FIG. 4), and various input and output interfaces thereon. The control board 13 controls the operations of an illumination unit 11 and the image-capturing unit 12. The control board 13 outputs the captured image from the image-capturing unit 12 and data relating to the image to the POS terminal 10.

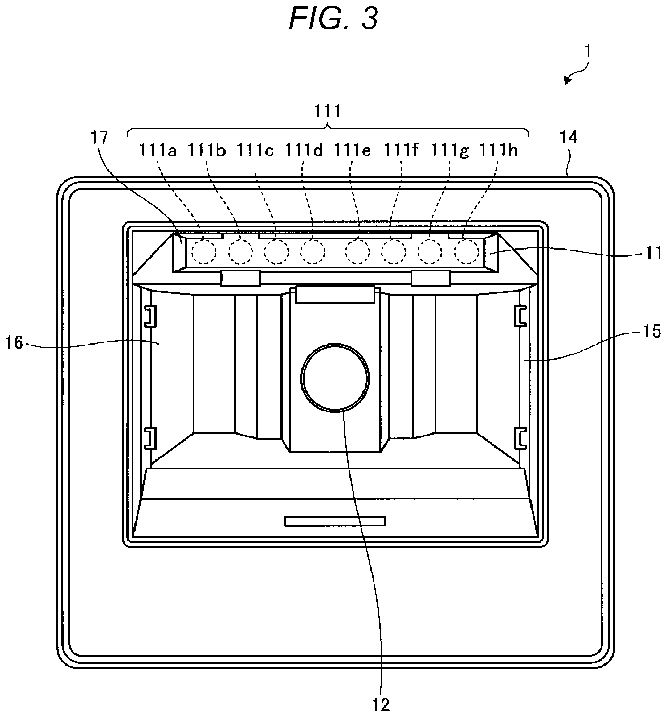

FIG. 3 is a front view illustrating the reading unit 1, as viewed from the outside of the reading window 16. As illustrated in FIG. 3, the reading window 16 is provided on the opening 15 of the casing 14. The illumination unit 11 and the image-capturing unit 12 are provided inside of the reading window 16. As illustrated in FIG. 3, for example, the image-capturing unit 12 is arranged at substantially the center of the reading window 16. The image-capturing unit 12 captures an image of an object through the reading window 16 from the inside of the casing 14 to output the captured image as the image data.

The image-capturing unit 12 captures frame images at a predetermined frame rate according to an image-capturing control signal input by the CPU 161 (refer to FIG. 4) and stores the image data corresponding to the frame images in the RAM 163 (refer to FIG. 4).

The illumination unit 11 is a lighting device for illuminating the article held over the reading window 16. The illumination unit 11 includes a plurality of light emitting elements and is able to change luminance of respective light emitting elements according to a light emission control signal from the CPU 161 and a load current. As illustrated in FIG. 3, as an example of an arrangement of the illumination unit 11, a plurality of white LEDs (Light Emitting Diode) 111 (111a to 111h) are aligned in a line along the upper side of the reading window 16.

The light emitting surface of each LED 111 is directed toward the reading window 16. Also, the number of LEDs 111 included in the illumination unit 11 is not limited to the example in FIG. 3. As the light emitting element, another color of LED may be used and combination of different colors of LEDs may be used. Light emitting elements other than the LEDs may also be used.

A diffusion filter 17 for diffusing light from the plurality of LEDs is provided at the inside of the casing 14 or in front of the illumination unit 11. That is, the diffusion filter 17 is provided between the LEDs 111 and the reading window 16, in the casing 14. The diffusion filter 17 is arranged on a light emission path from the illumination unit 11 to diffuse light from the illumination unit 11. Unevenness of the light emitted by the illumination unit 11 is mitigated by the diffusion filter 17 and thus the light is irradiated towards the reading window 16 as generally homogeneous illumination light.

Next, a hardware configuration of the POS terminal 10 and the reading device 101 is described.

FIG. 4 is a block diagram illustrating an example configuration of the POS terminal 10 and the reading device 101. The POS terminal 10 includes a microcomputer 60 as an information processing unit for performing information processing. In the microcomputer 60, a CPU (Central Processing Unit) 61 is connected to a ROM (Read Only Memory) 62 and a RAM (Random Access Memory) 63 through a bus. The CPU 61 executes various processing to control the various components of the POS terminal 10.

The CPU 61 of the POS terminal 10 is connected with the drawer 21, the keyboard 22, the display device 23, the touch panel 26, and the customer display device 24 as described above through various input and output circuits (all components are not illustrated). These components are controlled by the CPU 61.

The CPU 61 of the POS terminal 10 is connected with an HDD (Hard Disk Drive) 64. Programs or various files are stored in the HDD 64. All or some of the programs or various files stored in the HDD 64 are copied to the RAM 63 and executed by the CPU 61 at the time the POS terminal 10 starts. An example of the programs stored in the HDD 64 includes a program PR for a commodity sales data processing. An example of the files stored in the HDD 64 includes a commodity master file F1 distributed from a store computer SC.

The commodity master file F1 includes information of a commodity name, a unit price, a category of a commodity in association with a commodity code for identifying the commodity. The commodity master file F1 also stores a captured image of the commodity as a reference image used for the object recognition. As the reference image for object recognition, the commodity master file F1 may use a captured image of each commodity, as a reference image, or may store data indicating feature values extracted from the reference image, i.e., color information, a surface shape, hue of the surface, and the like of the reference image.

The CPU 61 of the POS terminal 10 is connected with a communication interface 25 for performing a data communication with the store computer SC. The store computer SC is installed in an office of the store. The commodity master file F1 distributed to the POS terminal 10 is stored in the HDD (not illustrated) of the store computer SC.

Furthermore, the CPU 61 of the POS terminal 10 is connected with a connection interface 65 which enables the POS terminal 10 to perform a data communication with the reading device 101. The connection interface 65 is connected with the reading device 101. The CPU 61 of the POS terminal 10 is connected with a printer 66 which conducts printing on a receipt paper. The printer 66 prints transaction contents of one transaction on the receipt paper under the control of the CPU 61.

The reading device 101 includes a microcomputer 160 in which the CPU 161 is connected with the ROM 162 and the RAM 163 by a bus. The microcomputer 160 is arranged on the control board 13 (see FIG. 2) described above. The program executed by the CPU 161 is stored in the ROM 162. The CPU 161 is connected with the illumination unit 11, the image-capturing unit 12, and the voice output unit 165 by a bus to control operations of the illumination unit 11, the image-capturing unit 12, and the voice output unit 165.

The voice output unit 165 includes a sound circuit for generating a predetermined warning sound or the like, and a speaker. The voice output unit 165 performs notification by a sound, such as a warning sound, under the control of the CPU 161.

The CPU 161 is connected with the POS terminal 10 through a connection interface 175. The CPU 161 inputs image data corresponding to frame images captured by the image-capturing unit 12 to the POS terminal 10 through the connection interface 175 and the connection interface 65.

The CPU 161 is connected with the display and operation unit 104 through the connection interfaces 175 and 176. The CPU 161 controls display operations in the display and operation unit 104 and receives input of operations from the display and operation unit 104. The display and operation unit 104 is connected with the POS terminal 10 through the connection interface 176. The CPU 61 of the POS terminal 10 controls the operation in the display and operation unit 104 of the reading device 101.

Next, the program executed by the reading device 101 of the present embodiment is described.

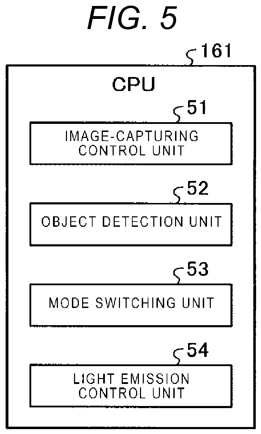

FIG. 5 is a functional block diagram illustrating a functional configuration of the reading device 101. As illustrated in FIG. 5, the program executed by the reading device 101 of the present embodiment is executed by the CPU 161 to form a modular structure including an image-capturing control unit 51, an object detection unit 52, a mode switching unit 53, and a light emission control unit 54. The CPU 161 (processor) reads the program from the storage medium (ROM 162), loads the program onto a main storage device, and executes the program to form the respective units. With this operation, the image-capturing control unit 51, the object detection unit 52, the mode switching unit 53, and the light emission control unit 54 are implemented by the CPU 161 and the main storage device.

The image-capturing control unit 51 controls the operation of the image-capturing unit 12 and stores the captured image data (corresponding to the frame images described above) of an image-capturing area into the RAM 163 in an image-capturing order. As an example, the image-capturing control unit 51 outputs an image-capturing control signal (exposure pulse signal) to the image-capturing unit 12 and the image-capturing unit 12 captures an image for each frame according to a pulse cycle. As the image-capturing control signal, for example, a pulse signal which switches HI and LO states at a cycle of 1/5000 sec and instructs turning ON of image-capturing in the HI-state can be used.

The image-capturing control unit 51 increases an exposure time (image-capturing time) for each frame image and also increases gain of the image-capturing unit 12 to capture an image of one frame, in a standby mode compared to a reading mode. In the standby mode, the light amount of the illumination unit 11 is reduced compared with that in the reading mode. Accordingly, the frame image is captured in a state in which the exposure time is lengthened and gain of the image-capturing unit 12 is increased to make it possible for the image-capturing unit 12 to obtain an image with little blur even under the dark illumination, and even if a moving object is projected. Therefore, accuracy of the object detection by the object detection unit 52 is improved.

The object detection unit 52 compares the captured images, which are stored in the RAM 163 by the image-capturing control unit 51 in a time difference manner, with each other. More specifically, the object detection unit 52 compares the frame image captured in the image-capturing order with the frame images stored before and after the frame image is captured to detect an object (image-capturing target) positioned in the image-capturing area.

Also, a captured image is acquired in advance in a state in which a moving object such as a person or an object does not come into the image-capturing area of the reading device 101, and the captured image may be used for comparison at the time an object is detected, as a background image in a state in which a detection target is not present. For example, a difference between the captured image and the background image is determined, and if a change having a predetermined threshold value (change in color density, intensity of contrast, hue, and the like) from the background image is found in an area or a pixel, it may be determined that an object is detected. As another method, if the feature value of the captured image is compared with the feature value of the background image by using the object recognition technology and the similarity degree between both images is lower than a predetermined value, it may be determined that an object is detected.

The object recognition technology may be used for an object detection processing. In a case in which the object recognition technology is used, a part or all of the detection processing is executed by the POS terminal 10 and a detection result may be transmitted to the reading device 101.

If the object detection unit 52 detects the object in the image-capturing area, the mode switching unit 53 switches an operation mode of the reading device 101 from the standby mode to the reading mode.

The reading mode is an operation mode in which the image-capturing unit 12 performs a reading processing for reading information relating to a commodity from the captured frame images. The standby mode is an operation mode in which reading processing is halted and the light amount of the illumination unit 11 is reduced to decrease glare and power consumption.

The light emission control unit 54 outputs the light emission control signal to each of the plurality of LEDs 111 (111a to 111h) included in the illumination unit 11 and controls turning ON and OFF of each LED 111, a pulse emission pattern, a luminance of each LED 111, and the like. For example, a rectangular pulse signal can be used as the light emission control signal.

The light emission control unit 54 reduces the light amount of the illumination unit 11 in the standby mode compared with that of the illumination unit 11 in the reading mode. With this operation, power consumption of the illumination unit 11 is reduced and thus the power saving is achieved. Also reduction in glaring in surroundings while detecting an object (person or article such as commodity) in the image-capturing area is achieved.

As an example, the light emission control unit 54 controls a duty ratio of the light emission control signal to reduce the light amount of the illumination unit 11 in the standby mode compared with that in the reading mode. In the reading mode, the light emission control unit 54 increases the duty ratio of the light emission control signal to lengthen a lighting period to increase the light amount of the illumination unit 11 per a unit time. On the other hand, in the standby mode, light emission control unit 54 decreases the duty ratio of the light emission control signal to shorten a lighting period to decrease the light amount of the illumination unit 11 per a unit time.

As another example, the light emission control unit 54 may reduce a driving current of the illumination unit 11 in the standby mode compared with that in the reading mode. With this operation, the light emission control unit 54 can decrease the light amount of the illumination unit 11 in the standby mode compared with that in the reading mode.

Also, any of a voltage control method or a current control method may be adopted as a method for controlling the light emission control signal. In the voltage control method, the light emission control unit 54 decreases a peak voltage value of the light emission control signal to reduce the light amount of the entire illumination unit 11. In the current control method, the light emission control unit 54 decreases a current value of the light emission control signal to reduce the light amount of the entire illumination unit 11.

In a still another method, the light emission control unit 54 reduces the number of the LEDs 111 which emit light in the standby mode compared with that in the reading mode. For example, the light emission control unit 54 outputs the light emission control signal only to some of the LEDs 111 (for example, LEDs 111a and 111h) out of the plurality of the LEDs 111a to 111h included in the illumination unit 11 in the standby mode. With this operation, the light emission control unit 54 reduces the light amount of the entire illumination unit 11 in the standby mode compared with that in the reading mode.

In a still yet another method, the light emission control unit 54 may use different light emitting elements for emitting light between the standby mode and the reading mode. For example, the light emission control unit 54 may use, as a light source (second illumination unit) in the standby mode, a light emitting element for which the light amount is smaller than that of the light emitting elements driven in the reading mode to reduce the light amount of the illumination unit 11 in the standby mode compared with that in the reading mode. In the following, an example in which the light source is switched to reduce the light amount is described.
1) A method of utilizing an indicator light as the second illumination unit:
   There is a case in which an indicator light for notifying a user of the standby mode is provided in the reading unit 1. For example, the indicator light is provided below the reading window 16. In the standby mode, the indicator light emits light in blinking manner to indicate the standby mode. The indicator is utilized as an illumination unit in the standby mode and may also be used as a unit for illumination at the time of image-capturing. The light amount of the indicator light is smaller than that required to identify the commodity without error. Thus glare is reduced compared with the illumination in the reading mode. Accordingly, if the indicator light is utilized in an object detection processing for determining whether to return to the reading mode, reduction in power consumption can be achieved without adding any components to the conventional reading device.
2) A method of utilizing an infrared-ray emission unit as the second illumination unit:
   There is a case in which an infrared-ray emission unit is used in the reading device as a light source for detecting an object or an auxiliary light source used for object recognition. In the reading device having such emission unit, the infrared-ray emission unit may also be used as the light source for illumination for image-capturing in the standby mode. In this case, the image-capturing unit 12 adopts an infrared camera or a structure corresponding to capturing an image in the infrared spectrum. With this arrangement, the object detection processing can be carried out without using visible light in the standby mode.
3) A method of changing some of a plurality of light emitting elements to an infrared emission unit:
   If the infrared emission unit is used as a unit for image-capturing in the standby mode, the infrared emission unit included in an original device as described above may be used, but an infrared emission unit may be newly provided. For example, some of the plurality of LEDs 111 (see FIG. 3) included in the illumination unit 11 may be replaced with infrared light emitting elements and the infrared light emitting elements may be used as a light source for object detection in the standby mode. As such, according to the arrangement described above in which the infrared light emitting elements are aligned in the same array as the LED 111, the configuration of the casing and the diffusion filter 17 of the existing illumination unit 11 can be used without any modification and the light emitting elements can be arranged in the installation place for the LED 111 without any modification. Accordingly, there is no need to significantly change an apparatus structure and thus, increase in manufacturing costs can be reduced.

Also, the light emission control unit 54 may reduce the light amount of the illumination unit 11 in the standby mode by combining any of the methods described above.

Next, an example of an operation of the reading device 101 is described.

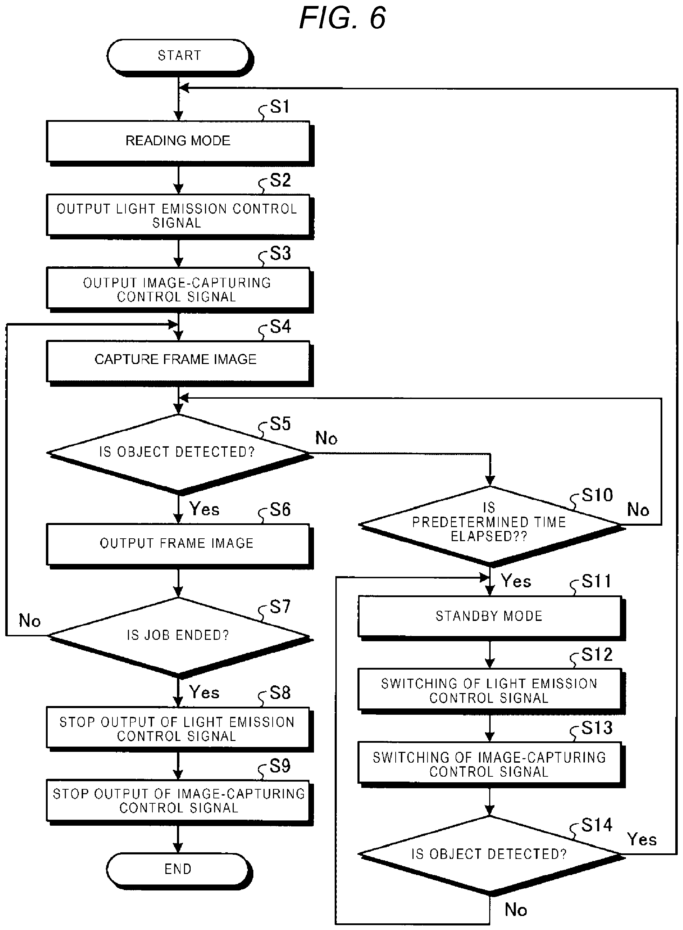

FIG. 6 is a flowchart illustrating an example sequence of operations of the reading device 101. First, the reading device 101 starts in a reading mode (Act S1). The light emission control unit 54 outputs the light emission control signal in the reading mode to each of the LEDs 111a to 111h (Act S2). The image-capturing control unit 51 outputs the image-capturing control signal in the reading mode to the image-capturing unit 12 (Act S3). The image-capturing control unit 51 sequentially captures image date corresponding to each frame image into the RAM 163 according to the pulse cycle of the image-capturing control signal (Act S4).

The object detection unit 52 compares the frame image captured into the RAM 163 with images captured before and after the frame image is captured in a time difference manner to determine whether the object imaged in the image-capturing area is detected or not (Act S5). If it is determined that the object is detected by the object detection unit 52 (Yes in Act S5), the image-capturing control unit 51 outputs the frame image to the POS terminal 10 (Act S6). The CPU 61 of the POS terminal 10 performs a pattern recognition or an object recognition on the input image to read the commodity code or identify the commodity. The CPU 61 of the POS terminal 10 reads a name and a price of the identified commodity or other commodity information from the commodity master file F1 to perform sales-registration of the commodity.

After the processing in Act S6 is executed, the CPU 161 of the reading device 101 determines whether an operation for instructing end of the job is received from the keyboard 107 of the reading device 101 or the POS terminal 10 or not (Act S7). If it is determined that the operation for instructing end of the job is not received (No in Act S7), the CPU 161 returns to the processing in Act 4. If it is determined that the operation for instructing end of the job is received (Yes in Act S7), the light emission control unit 54 stops outputting the light emission control signal (Act S8). The image-capturing control unit 51 stops outputting of the image-capturing control signal (Act S9).

On the other hand, if it is determined that a predetermined time elapses (Yes in Act S10) in a state in which the object is not detected by the object detection unit 52 (No in Act S5), the mode switching unit 53 switches the operation mode of the reading device 101 from the reading mode to the standby mode (Act S11). If it is determined that a predetermined time has not elapsed (No in Act S10), the CPU 161 returns to the processing in Act 5 and counts the elapsed time until the predetermined time elapses.

After switching to the standby mode is performed (Act S11), the light emission control unit 54 switches the light emission control signal output to the illumination unit 11 from the light emission control signal in the reading mode to the light emission control signal in the standby mode (Act S12). For example, the light emission control unit 54 outputs the light emission control signal having the duty ratio which is decreased compared with that in the reading mode. With this operation, the light amount of the entire illumination unit 11 is reduced compared to that in the reading mode.

The image-capturing control unit 51 switches the image-capturing control signal output to the image-capturing unit 12 from the image-capturing control signal in the reading mode to the image-capturing control signal in the standby mode (Act S13). For example, the image-capturing control unit 51 changes the image-capturing control signal in the standby mode compared from that in the reading mode to increase an exposure time in the standby mode from than that in the reading mode. Similarly, the image-capturing control unit 51 increases gain of the image-capturing unit 12 to capture the frame images to store the captured image in the RAM 163 (Act S13).

The object detection unit 52 compares the frame image stored in the RAM 163 with the frame images before and after the frame image is captured to determine whether the object imaged in the image-capturing area is detected or not (Act S14). If it is determined that the object is detected by the object detection unit 52 (Yes in Act S14), the mode switching unit 53 ends the standby mode and switches the operation mode of the reading device 101 to the reading mode (return to the processing in Act S1). If it is determined that the object is not detected by the object detection unit 52 (No in Act S14), the CPU 161 returns to the processing in Act S11 and the operations from Act S1 to Act S14 are repeated until the object is detected.

As described above, the reading device 101 of the present embodiment includes the object detection unit 52 for detecting the object in the image-capturing area in the time difference manner between the captured images. With this arrangement, the image-capturing unit 12 for reading a code or performing object recognition is also used for object detection in the standby mode. According to the present embodiment, even if a sensor dedicated to object detection such as the human sensor or the infrared sensor is not included, the object detection function described above can be realized.

In the present embodiment, the image-capturing unit 12 is also used as the image-capturing unit for object detection to determine whether to return to the reading mode. With the arrangement described above, the image-capturing area in the read mode and a detection target area in the standby mode become the same area and thus, the object detection can be efficiently performed. If the image-capturing target area and the detection target area are different from each other, an erroneous response can be caused by movement of an object or a person who passes by and thus there is a possibility that the standby mode is ended. According to the present embodiment, reduction in such erroneous detection can be achieved.

A program executed by the reading device 101 of the present embodiment is provided by being stored in the ROM 162 or the like in advance. The program executed by the reading device 101 of the embodiment may also be provided by being recorded in a computer readable recording medium such as a CD-ROM, a flexible disk (FD), a CD-R, a digital versatile disk (DVD) in a file of an installable format or executable format.

Furthermore, the program executed by the reading device 101 of the embodiment may be stored on a computer connected to a network such as the Internet and provided by being downloaded via the network. The program executed by the reading device 101 of the embodiment may be provided or distributed via the network such as the Internet.

While certain embodiments have been described, these embodiments have been presented by way of example only, and are not intended to limit the scope of the invention. Indeed, the novel methods and systems described herein may be embodied in a variety of other forms; furthermore, various omissions, substitutions and changes in the form of the methods and systems described herein may be made without departing from the scope of the invention. The accompanying claims and their equivalents are intended to cover such forms or modifications as would fall within the scope of the invention.

For example, in the embodiment described above, the program is executed by the reading device 101 to realize functions of the image-capturing control unit 51, the object detection unit 52, the mode switching unit 53, and the light emission control unit 54, some or all of these functions may be realized by the POS terminal 10.

For example, the functions of the image-capturing control unit 51, the object detection unit 52, the mode switching unit 53, and the light emission control unit 54 described above may be applied to a self-service checkout apparatus. The self-service checkout apparatus (hereinafter, simply referred to as a self-service POS) is a sales registration apparatus on which a customer himself/herself performs reading and registering operation of the commodity and a settlement operation.

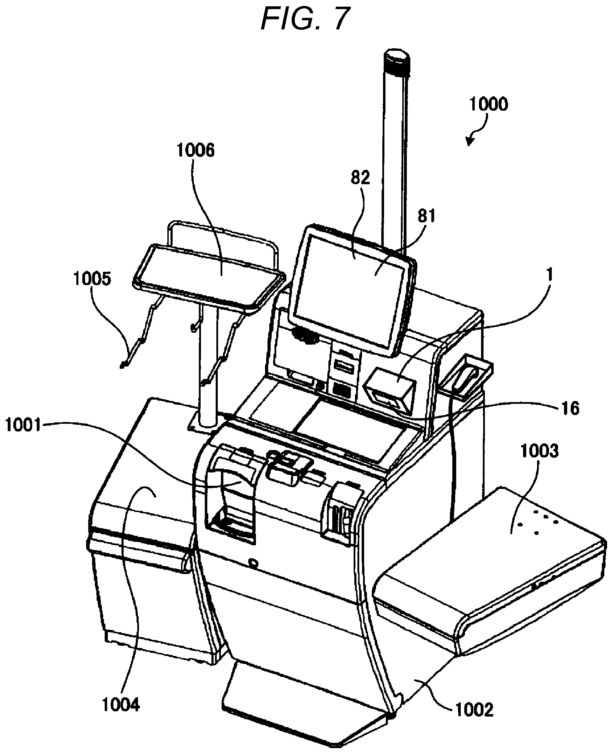

FIG. 7 is a perspective view illustrating an example of a constitution of a self-service POS 1000. As illustrated in FIG. 7, a main body 1002 of the self-service POS 1000 includes a first display unit 82 having a touch panel 81 arranged on the surface thereof and the reading unit 1 for capturing an image of a commodity to identify the commodity. The reading unit 1 of the self-POS has a function equivalent to that of reading unit 1 described above.

The reading unit 1 includes the illumination unit 11 and the image-capturing unit 12 (all the units are not illustrated) therein. The illumination unit 11 and the image-capturing unit 12 in the reading unit 1 of the self-service POS have the same configuration as in the reading unit 1 described above. Illumination and image-capturing is performed through the reading window 16. Specifically, an image-capturing range of the image-capturing unit 12 is illuminated by the illumination unit 11. The image-capturing unit 12 captures an image of the commodity held over the reading window 16 by the customer. The reading unit 1 reads a code symbol attached to the commodity from the captured image and performs recognition of the commodity based on the captured image.

The first display unit 82 is, for example, a liquid crystal display. The first display unit 82 displays the total amount of commodities, the deposit amount, and the change amount. The first display unit 82 also displays a settlement screen on which a payment method is selected.

The self-service POS 1000 includes a commodity placing table 1003 for placing a basket in which a commodity subject to the settlement is put at the right side of the main body 1002. The self-service POS 1000 also includes a commodity placing table 1004 for holding the commodity which is registered at the left side of the main body 1002. The commodity placing table 1004 is provided with a bagging hook 1005 for hooking a bag in which the registered commodity is put or a temporary placing table 1006 for temporarily placing the registered commodity before the commodity is put into the bag. A weighing device (not illustrated), which has a function of confirming whether or not weight of the commodity is the same before and after the registration is performed, is provided on each of the commodity placing tables 1003 and 1004. The main body 1002 of the self-POS 1000 includes a change machine 1001 for receiving bills for settlement or outputting bills for change.

By adopting the self-service POS 1000 having the configuration described above, reduction in components can be achieved in the self-service POS 1000 which performs switching between the reading mode and the standby mode.

As described above, according to the present embodiment, a reading device, which switches the reading mode and the standby mode, can achieve reduction in components thereof.

## Claims

1. A reading device comprising:
an image capturing device;
a light emitting device; and
a processor configured to:
control the image capturing device to capture an image of an image capturing area,
when the reading device is in a standby mode:
determine, based on the captured image, whether an object is in the image capturing area, and
if the object is determined to be in the image capturing area, switch an operation mode of the reading device from the standby mode to a reading mode in which a commodity in the image capturing area is identified based on the captured image, and
control an amount of light emitted by the light emitting device based on whether the reading device is in the standby mode or in the reading mode, wherein the amount of light emitted by the light emitting device in the standby mode is less than the amount of light emitted by the light emitting device in the reading mode.

2. The device according to claim 1, wherein the processor is configured to control a duty ratio of pulse emission of the light emitting element to reduce the amount of light emitted by the light emitting element in the standby mode compared with that in the reading mode.

3. The device according to claim 1 or 2, wherein the processor is configured to reduce a current of a driving signal provided to the light emitting element in the standby mode compared with that in the reading mode so that the amount of light emitted by the light emitting element in the standby mode is reduced compared with that in the reading mode.

4. The device according to any one of claims 1 to 3, wherein:
the light emitting element is configured to include a plurality of light emitting elements, and
the processor is configured to decrease the number of the light emitting elements which emit light in the standby mode compared with that in the reading mode so that the light by the light emitting element by the light emitting element in the standby mode is reduced compared with that in the reading mode.

5. The device according to any one of claims 1 to 4, further comprising:
a second light emitting element controlled to emit light in the standby mode to notify a user of the standby mode, wherein the processor is configured to control the second light emitting element to emit a reduced light amount compared with that in the reading mode.

6. The device according to any one of claims 1 to 5, wherein the processor is further configured to:
in the reading mode, determine whether no object is in the image capturing area for longer than a predetermined time, and
if no object is determined to be in the image capturing area for longer than the predetermined time, switch the operation mode of the reading device from the reading mode to the standby mode.

7. The device according to any one of claims 1 to 6, wherein the light emitting element is an infrared light emitting element.

8. The device according to any one of claims 1 to 7, wherein, in the reading mode, the processor is configured to identify the commodity by extracting feature values of the object from the captured image and comparing the extracted feature values to reference feature values.

9. The device according to any one of claims 1 to 8, wherein the processor is further configured to control the image capturing device to capture the image in the standby mode using a longer exposure time compared with that in the reading mode.

10. The device according to any one of claims 1 to 9, wherein the processor is further configured to control the image capturing device to capture the image in the standby mode using a higher gain compared with that in the reading mode.

11. A point of sales system comprising:
a point of sales terminal; and
the device according to any one of claims 1 to 10 connected the point of sales terminal.

12. A method for controlling a light emission of a reading device which includes an image capturing device and a light emitting device, the method comprising:
controlling the image capturing device to capture an image of an image capturing area;
when the reading device is in a standby mode:
determining, based on the captured image, whether an object is in the image capturing area, and
if the object is determined to be in the image capturing area, switching an operation mode of the reading device from the standby mode to a reading mode in which a commodity in the image capturing area is identified based on the captured image; and
controlling an amount of light emitted by the light emitting device based on whether the reading device is in the standby mode or in the reading mode, wherein the amount of light emitted by the light emitting device in the standby mode is less than the amount of light emitted by the light emitting device in the reading mode.

13. The method according to claim 12, wherein controlling the amount of light emitted by the light emitting device includes controlling a duty ratio of pulse emission of the light emitting element to reduce the amount of light emitted by the light emitting element in the standby mode compared with that in the reading mode.

14. The method according to claim 11 or 12, wherein controlling the amount of light emitted by the light emitting device includes reducing a current of a driving signal provided to the light emitting element in the standby mode compared with that in the reading mode so that the amount of light emitted by the light emitting element in the standby mode is reduced compared with that in the reading mode.

15. A non-transitory computer readable medium storing a program causing a computer to execute the method according to any one of claims 12 to 14.
